# FASCICULE DE BREVET EUROPEEN

(11) **EP 2 512 898 B1**
(45) Date de publication et mention de la délivrance du brevet: **12.04.2017**
(21) Numéro de dépôt: 10809000.2
(22) Date de dépôt: 07.12.2010
(51) Int. Cl.: B60W 20/00, B60K 6/387, B60K 6/52, B60K 6/48, B60W 10/08, B60W 10/02

(54) **PROCEDE ET SYSTEME DE DESACCOUPLEMENT D'UNE MACHINE ELECTRIQUE SUR UN TRAIN ROULANT DE VEHICULE, NOTAMMENT D'UN VEHICULE AUTOMOBILE HYDRIDE**
VERFAHREN ZUR ABSCHALTUNG EINER ELEKTRISCHEN MASCHINE AUF DEM FAHRGESTELL EINES FAHRZEUGES, IM BESONDEREN EINES HYBRIDAUTOS
METHOD FOR DISCONNECTING AN ELECTRICAL MACHINE ON A RUNNING GEAR OF A VEHICLE, IN PARTICULAR A HYBRID MOTOR VEHICLE

(30) Priorité: 17.12.2009 FR 0959135
(43) Date de publication de la demande: 24.10.2012
(73) Titulaire: Peugeot Citroën Automobiles SA, 78140 Vélizy Villacoublay (FR)
(72) Inventeur: SCHAEFFER, Eric, F-75013 Paris (FR); GALINAUD, Florian, F-75013 Paris (FR)
(74) Mandataire: Rosenberg, Muriel Sylvie
(86) Numéro de dépôt international: PCT/FR2010/052628
(87) Numéro de publication internationale: WO 2011/080439

(56) Documents cités:
- EP-A2- 1 393 952
- EP-A2- 1 393 959
- FR-A1- 2 809 352
- FR-A1- 2 929 574
- JP-A- 11 243 608

## Description

L'invention concerne un procédé et un système de désaccouplement d'une machine électrique sur un train roulant d'un véhicule, notamment d'un véhicule automobile hybride, lorsque le véhicule est roulant.

Le procédé et le système sont particulièrement adaptés à un véhicule hybride qui utilise par ailleurs un moteur thermique, de façon à faire contribuer la machine électrique à la traction du véhicule.

Le document FR2723553 divulgue par exemple un véhicule automobile comprenant un système de commande sélective pour actionner séparément ou simultanément les chaînes de traction électrique et thermique.

Les documents EP-A2-1 393 959 et EP-A2-1 393 952 divulguent un procédé de désaccouplement d'une machine électrique accouplée avec les roues d'un véhicule au moyen d'un embrayage. Le document US5403244 divulgue une chaîne de traction électrique de véhicule à couplage de transmission directe en utilisant des moyens de synchronisation basés sur des plaques de friction de type disques d'embrayage. Les accouplements de type embrayage sont générateurs de perte d'énergie.

Pour augmenter le rendement, l'état connu de la technique s'oriente vers des accouplements de type crabots. Ainsi le document FR20905438 décrit un procédé de pilotage mettant en oeuvre deux crabots dans lequel un effort exercé en translation sur l'un des crabots pour l'approcher de l'autre crabot, est modulé en fonction de différentes phases d'approche.

Le document JP-A-11 243 608 divulgue un véhicule automobile comprenant une machine électrique accouplée avec les roues du véhicule au moyen de crabots.

Une situation de vie véhicule roulant fait apparaître une difficulté pour désengager les crabots rapidement et sans à-coup quelques soient les conditions, véhicule à vitesse stabilisée, en accélération ou en décélération.

Un but de la présente invention est de réaliser un désaccouplement simplifié sans embrayage qui ne nécessite pas de moduler un effort en translation, particulièrement quand le véhicule est roulant.

Pour atteindre ce but, l'invention a pour objet un procédé de désaccouplement d'une machine électrique accouplée avec des roues de train roulant d'un véhicule dépourvu d'embrayage au moyen de crabots. Le procédé est remarquable en ce qu'il comprend deux étapes activées successivement à partir d'une demande de désaccouplement :
- une première étape de pilotage de la machine électrique en couple, dans laquelle on applique à la machine électrique une consigne de couple égale à un seuil calibré de couple cible (d) pour obtenir un couple nul exercé entre les crabots ; et
- une deuxième étape de pilotage de la machine électrique en couple, dans laquelle on applique à la machine électrique une consigne de couple qui suit une rampe débutant avec ledit seuil calibré de couple cible et terminant avec une valeur nulle.

Particulièrement, dans la première étape de pilotage de la machine électrique en couple, on désactive un actionneur de crabotage, de façon à permettre au crabot de se dégager le plus tôt possible.

Plus particulièrement, dans la deuxième étape de pilotage, on commande ledit actionneur de façon à séparer les crabots.

Avantageusement, ledit seuil calibré de couple cible est paramétrable.

L'invention a aussi pour objet un système d'accouplement d'une machine électrique avec des roues de train roulant d'un véhicule dépourvu d'embrayage lorsque le véhicule est roulant, comprenant :
- un crabot amont solidaire en rotation de la machine électrique un crabot aval solidaire en rotation des roues et un actionneur agencé pour rapprocher les deux crabots en translation le long d'un axe commun de rotation ; et
- un dispositif électronique agencé pour recevoir une demande de désaccouplement, pour piloter la machine électrique en couple en lui appliquant une consigne de couple égale à un seuil calibré de couple cible qui permet d'obtenir un couple nul exercé entre les crabots, et pour désactiver l'actionneur de crabotage, de façon à permettre aux crabots de se dégager le plus tôt possible, puis pour suivre une rampe débutant avec ledit seuil calibré de couple cible et terminant avec une valeur nulle.

Particulièrement, le système d'accouplement comprend un actionneur de crabotage qui permet de séparer des crabots.

Avantageusement, ledit seuil calibré de couple cible est paramétrable.

L'invention a encore pour objet un véhicule automobile comprenant un système conforme à l'invention.

L'invention sera mieux comprise, et d'autres buts, caractéristiques, détails et avantages de celle-ci apparaîtront plus clairement au cours de la description explicative qui va suivre d'un mode de réalisation particulier, actuellement préféré de l'invention, donné uniquement à titre d'exemple illustratif et non limitatif, en référence aux dessins schématiques annexés; dans lesquels :
- la figure 1 est une vue schématique d'un véhicule automobile hybride comportant un système d'accouplement selon l'invention ;
- la figure 2 est une vue schématique du système d'accouplement selon l'invention ;
- la figure 3 est un chronogramme pour expliquer les étapes d'un procédé d'accouplement selon l'invention.

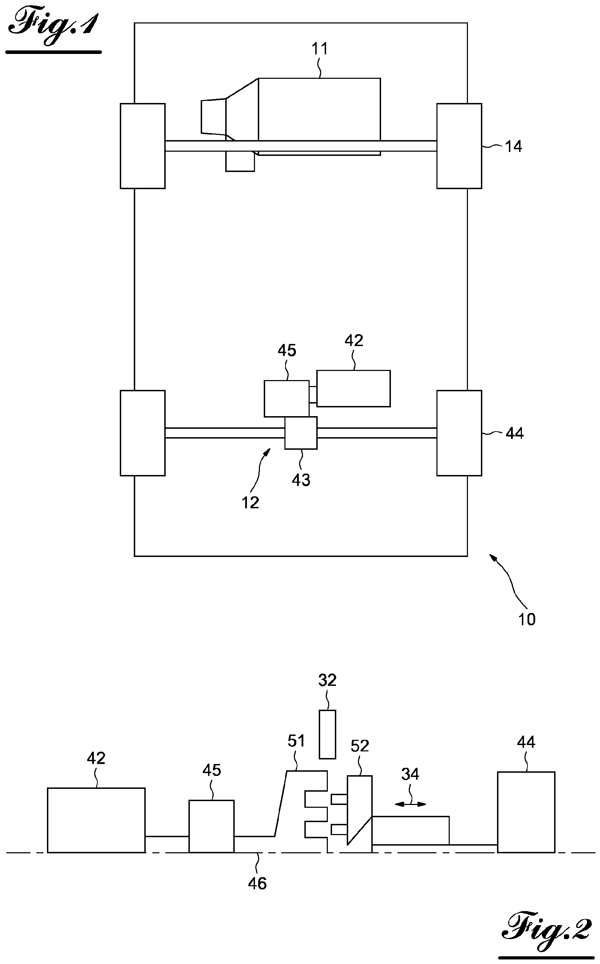

En référence à la figure 1, un véhicule 10 de type hybride, comprend un groupe motopropulseur 11 agencé pour entraîner deux roues avant 14 du véhicule 10, et un groupe motopropulseur 12 agencé pour entraîner deux roues arrière 44 appartenant à un même train roulant arrière du véhicule 10. Le groupe motopropulseur (GMP) 11 comprend de façon connue en soi, un moteur thermique situé ici à titre purement illustratif à l'avant du véhicule. Le groupe motopropulseur 12 comprend une machine électrique 42 reliée aux roues 44 par un mécanisme d'accouplement 43.

La figure 2 représente plus en détails le groupe motopropulseur 12 de la figure 1. Pour alléger la figure de façon à en faciliter la compréhension, l'axe de la machine électrique 42 et l'axe des roues 44 sont schématiquement repliés sur un même axe 46 au-dessus duquel sont simplement représentées les demi-parties de la machine électrique 42, du mécanisme d'accouplement 43 et d'un bloc sensé symbolisé les deux roues 44.

Dans le mécanisme d'accouplement 43, un système de crabotage comprend un crabot amont 51 et un crabot aval 52. Le crabot amont 51 est solidaire en rotation d'un réducteur 45 relié à l'arbre de sortie de la machine électrique 42. Le crabot aval 52 est solidaire en rotation des roues 44 via un mécanisme différentiel pour équilibrer de manière connue en soi, le couple entre les roues 44 du train arrière, notamment lorsqu'elles roulent à des vitesses différentes, par exemple dans un virage.

Le crabot 51 tourne autour de l'axe 46 à une vitesse de rotation proportionnelle ou égale à la vitesse de rotation de la machine électrique 42 et transmet un couple proportionnel au couple généré par la machine électrique 42 en conservant la puissance fournie par la machine électrique 42 à un facteur de rendement près qui résulte des pertes de transmission entre la machine électrique 42 et le crabot 51. Les pertes de transmission dans la machine électrique 42 et entre la machine électrique 42 et le crabot 51 peuvent être représentées par un couple de traînée de la partie amont du crabot 51.

Le crabot 52 tourne autour de l'axe 46 à une vitesse de rotation qui est fonction de la vitesse des roues 44. Un couple appliqué sur le crabot 52 est transmis aux roues 44. Lorsque le crabot 52 est désolidarisé du crabot 51 comme cela est représenté sur la figure 2, les roues 44 peuvent tourner ou ne pas tourner indépendamment de la vitesse de rotation de la machine électrique 42.

Le mécanisme d'accouplement 43 comprend un actionneur 34 agencé pour déplacer le crabot 52 en translation le long de l'axe 46. Chacune des faces en regard des crabots 51 et 52 est munie de dents et de cavités. Les dents d'un crabot sont dimensionnées pour venir se loger dans les cavités de l'autre crabot. Ainsi, lorsque les dents du crabot 52 font face aux cavités du crabot 51, comme cela est représenté sur la figure 2, l'actionneur 34 peut engager le crabot 52 en prise avec le crabot 51 de façon à rendre solidaire en rotation les crabots 51 et 52 autour de l'axe 46. Un capteur de position tout ou rien 32 est monté dans le mécanisme d'accouplement 43 pour détecter une position totalement engagée du crabot 52 dans le crabot 51.

Lorsque la machine électrique est accouplée par le mécanisme d'accouplement, les crabots 51 et 52 sont solidaires en rotation. Les dents du crabot 52 sont en prise dans les cavités du crabot 51. Lorsque la machine électrique 42 en mode moteur, applique un couple sur les roues 44, les faces des cavités du crabot 51 dont la normale est orientée dans le sens de rotation, exercent des forces de pression contre les faces de dents en regard du crabot 52 qui génèrent des forces de frottement obéissant à la loi tribologique de Coulomb. De même, lorsque la machine électrique 42 en mode génératrice, subit un couple des roues 44, les faces des cavités du crabot 51 dont la normale est orientée dans le sens inverse de rotation, sont soumises à des forces de pression exercées par les faces en regard de dents du crabot 52 qui génèrent des forces de frottement obéissant ici encore à la loi tribologique de Coulomb. Les forces de frottement alors d'autant plus élevées que le couple est élevé, contrecarrent l'actionneur 34 pour déplacer le crabot 52 en translation le long de l'axe 46 dans le sens d'un désengagement. Une solution consistant à dimensionner une forme propice des crabots pour faciliter le désengagement en présence d'un couple, pose un problème d'orientation pour répondre aux deux sens opposés possibles du couple selon que la machine électrique est motrice ou génératrice. Un surdimensionnement de l'actionneur 34 pour vaincre les forces de frottement en translation, présente l'inconvénient de provoquer une usure prématurée des crabots. Un traitement de surface particulier des crabots pour vaincre l'usure, présente l'inconvénient d'augmenter considérablement les coûts de fabrication. Au fur et à mesure que le crabot 52 quitte le crabot 51, la surface de contact des dents l'une sur l'autre diminue de sorte que les forces de pression qui résultent du couple, ont tendance à augmenter jusqu'à provoquer un ripage en rotation du crabot 51 sur le crabot 52 à l'instant où le crabot 52 quitte le crabot 51. Les contraintes alors générées sur les dents constituent une autre source d'usure, voire de micro ruptures. Les quelques phénomènes qui viennent d'être énoncés parmi d'autres, montrent une difficulté qui apparaît lorsque le véhicule est dans une situation roulante, pour dégager rapidement et sans à-coups les crabots dès qu'un désaccouplement de la machine électrique du véhicule est demandé par le conducteur. L'architecture mécanique du système de groupe motopropulseur arrière, ne comprend pas d'embrayage et ne comprend pas non plus de synchroniseur. Le seul mouvement du système est une translation d'un ou des crabots 51, 52, exercée ou activée par l'actionneur 34.

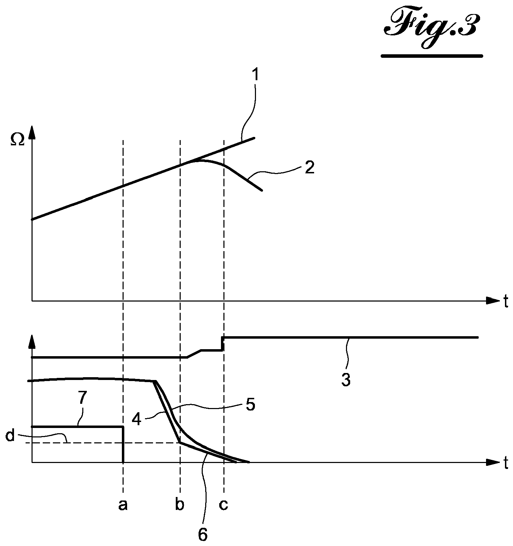

Pour remédier à ce problème, le groupe motopropulseur arrière comprend un dispositif électronique qui permet, comme nous allons l'expliquer à présent, un pilotage fin du couple de la machine électrique 42 en combinaison avec un pilotage séquentiel de l'actionneur 34 de crabotage de façon à atteindre un décrabotage rapide et sans à-coups. Le dispositif électronique est relié à l'actionneur 34 et au capteur 32, dans le mécanisme d'accouplement 43. Le dispositif électronique est relié d'autre part à la machine électrique 42 par un générateur électrique régulé en courant. Le générateur électrique est par exemple alimenté de manière connue à partir d'une batterie, non représentée. Le dispositif électronique comprend d'autre part des circuits électroniques de traitement numérique ou analogique agencés et/ou programmés pour exécuter les étapes de procédé expliquées à présent en référence à la figure 3.

Pour expliquer les étapes du procédé, la figure 3 représente l'état de différents signaux en fonction du temps.

Notamment, la courbe 7 représente le signal de commande de couplage pour une vitesse du véhicule supérieure ou égale à 5 km/H. Jusqu'à une date a à laquelle on reçoit une demande de découplage, le procédé est dans une étape initiale pour laquelle les crabots 51 et 52 sont engagés l'un dans l'autre de sorte que la machine électrique 42 est accouplée aux roues 44. Le signal de commande est représenté par une valeur haute sur la courbe 7 suivi à partir de l'instant a par une valeur basse. On comprendra que les valeurs haute et basse sont ici de pures conventions et que l'étape initiale peut tout aussi bien être représentée par une valeur basse du signal suivi au-delà de a par une valeur haute.

La ligne d représente un niveau ou seuil de couple C0 calibré en deçà duquel le décrabotage est possible. La valeur de couple C0 est avantageusement paramétrable de façon à permettre de la calibrer à une valeur qui annule le couple au niveau des crabots. Typiquement, le couple de valeur C0 est celui qui compense les traînées du réducteur et l'incertitude du pilotage en couple de la machine électrique.

La courbe 1 représente le régime de vitesse des roues 44 ramené au crabot 52. Dans l'étape initiale qui précède l'instant a, le véhicule étant roulant, une croissance de la courbe 1 dénote par exemple un véhicule en phase d'accélération. L'intérêt du procédé est de permettre le décrabotage quel que soit les variations de vitesses du véhicule pendant toute la phase de décrabotage.

La courbe 2 représente le régime de vitesse de la machine électrique 42 ramené au crabot 51, c'est-à-dire tenant compte de l'éventuel rapport de réduction du réducteur 45. Dans l'étape initiale qui précède l'instant a, la machine électrique 42, accouplée aux roues, a le même régime de vitesse que les roues.

Dans l'étape initiale précédent l'instant a, le pilotage de la machine électrique est en mode d'asservissement en vitesse ou en couple.

Le pilotage en mode d'asservissement en vitesse de la machine électrique 42 consiste à réguler en vitesse le rotor de la machine électrique. De manière connue, un asservissement en vitesse de machine électrique comprend généralement un premier étage de régulation en vitesse qui génère une consigne de courant pour alimenter la machine électrique de façon à annuler un écart de vitesse entre une consigne de vitesse du rotor et une mesure de vitesse du rotor reçue en retour. La consigne de courant générée par le premier étage est appliquée en entrée d'un deuxième étage dans lequel la consigne de courant est soumise à une limitation de capacité d'absorption et de fourniture en courant respectivement de la machine électrique et d'une source d'énergie électrique tel qu'une batterie ou un ensemble de super condensateurs. Le deuxième étage effectue une régulation en courant de la machine électrique en générant une consigne de tension à appliquer à la machine électrique de façon à annuler un écart entre la consigne de courant reçue du premier étage et une mesure de courant dans la machine électrique reçue en retour. Le signal de tension électrique appliqué à la machine électrique, commande directement un pont électronique de puissance qui module une tension électrique puisée dans la source d'énergie électrique. Le courant passant dans la machine électrique génère alors un couple qui, de manière connue, est proportionnel au courant électrique à excitation constante. Le couple ainsi généré permet d'imposer à la machine électrique une vitesse de rotation égale à la consigne tant que le courant n'atteint pas la limitation de capacité d'absorption et de fourniture en courant. En mode moteur et en mode générateur, le courant est respectivement positif et négatif.

Le pilotage en mode d'asservissement en couple de la machine électrique 42 consiste à réguler un couple fourni par le rotor de la machine électrique. De manière connue, un asservissement en couple de machine électrique comprend généralement lui aussi le premier étage de régulation en vitesse qui génère une consigne de courant pour alimenter la machine électrique qui tente d'annuler un écart de vitesses entre une consigne de vitesse du rotor et une mesure de vitesse du rotor reçue en retour. Cependant ici la consigne de vitesse est légèrement supérieure, respectivement légèrement inférieure, à une valeur attendue de mesure de vitesse, en mode moteur, respectivement en mode générateur, de manière à ne pas annuler l'écart de vitesses tant que la mesure effective de vitesse est égale à la valeur attendue de mesure. La consigne de courant générée par le premier étage est appliquée en entrée d'un deuxième étage dans lequel la consigne de courant est soumise à présent à une limitation en courant qui correspond à une consigne de couple. Comme précédemment, le deuxième étage effectue une régulation en courant de la machine électrique en générant une consigne de tension à appliquer à la machine électrique de façon à annuler l'écart entre la consigne de courant reçue du premier étage qui sature cette fois sur la limitation correspondant à la consigne de couple, et la mesure de courant dans la machine électrique reçue en retour. Comme précédemment, le signal de tension électrique appliqué à la machine électrique, commande directement un pont électronique de puissance qui module la tension électrique puisée dans la source d'énergie électrique. Le couple alors généré par le courant passant dans la machine électrique, est alors égal à la consigne de couple. La consigne en légère survitesse ou légère sous vitesse, en cas respectivement de consigne de couple positif ou négatif, permet de forcer le courant en saturation sur la limitation correspondant à la consigne de couple. Ainsi en cas de mise en roue libre mécanique accidentelle de la machine électrique, sa vitesse de rotation reste proche de la mesure de vitesse attendue sans sortir d'une plage de tolérance en sous vitesse et en survitesse car l'atteinte de l'une ou de l'autre a pour effet d'annuler l'écart de vitesse et par conséquent de dé saturer naturellement la boucle de régulation de courant.

La courbe 3 représente un signal généré par le capteur de position 32. Comme il a déjà été dit précédemment, dans l'étape initiale qui précède l'instant a, le mécanisme d'accouplement 43 est craboté, indiqué ici par une valeur basse du signal de la courbe 3.

La courbe 4 représente un signal de consigne de couple sur la machine électrique 42 qui, pendant l'étape initiale du procédé, est celle demandée par le régime de fonctionnement du véhicule. Par exemple, dans le cas d'une accélération du véhicule illustré sur la figure 3, la consigne de couple sur la machine électrique 42 est positive.

La courbe 5 représente le couple effectivement généré par la machine électrique qui peut différer sensiblement de la consigne, par exemple en fonction de la constante de temps de réponse de la boucle de régulation de la machine électrique ou d'autres facteurs.

A la date a à laquelle on reçoit la demande de découplage, le procédé entre dans une étape de contrôle au cours de laquelle le dispositif électronique vérifie si le mécanisme d'accouplement 43 est couplé ou découplé. En d'autres termes, le dispositif électronique vérifie si le capteur de position 32 indique une position couplée ou découplée des crabots 51 et 52. Si après vérification du mécanisme d'accouplement, le mécanisme d'accouplement est couplé, le procédé amène la consigne de couple à la valeur C0 comme l'indique la courbe 4 Comme indiqué ci-dessus, la valeur de couple C0 est celle qui compense les pertes par traînée en amont du crabot 51 de sorte que le couple au niveau des crabots est presque nul à une date b.

Tant que les crabots sont accouplés, le régime de vitesse de la machine électrique, indiqué par la courbe 2, suit le régime de vitesse des roues, indiqué par la courbe 1.

Dès que le seuil calibré de couple cible (d) est atteint à l'instant (b), le dispositif électronique de pilotage de la machine électrique, génère une consigne qui suit une rampe dont le point de départ est égal à la valeur du seuil calibré de couple cible (d) et dont le point d'arrivée est une valeur nulle. Dans cette deuxième étape de pilotage en couple de la machine électrique, comme on le voit sur la courbe 3, le crabot (52) commence à se séparer du crabot (51) tout d'abord de manière progressive puis définitivement à l'instant (c). Après désengagement du crabot (52) hors du crabot (51), le couple généré par la machine électrique ne suffisant plus à l'entrainer, sa vitesse de rotation diminue comme on le voit sur la courbe (2), entrainé essentiellement par son inertie propre.

A l'instant c, le capteur de position 32 renvoi l'information "crabot désengagé". Les courbes (4, 5 et 6) de la figure 3 correspondent à un couple moteur de la machine électrique (42), typiquement dans le cas d'une accélération du véhicule. Il est bien entendu que le couple positif en régime moteur est remplacé par un couple négatif en régime génératrice, par exemple dans le cas d'une décélération. Les courbes sont alors symétriques par rapport à l'axe des temps. Les pentes sont inversées de façon à terminer la rampe dans un cas comme dans l'autre à une valeur nulle à l'instant (c).

En termes économiques, l'exploitation des possibilités de pilotage de la machine électrique en couple à tout régime de fonctionnement, associée à un actionneur simplifié, pilotée de façon simple en mode tout ou rien, permet de réduire notablement les coûts par rapport à des systèmes plus complexes.

Ce groupe motopropulseur électrique peut être monté aussi bien à l'avant qu'à l'arrière du véhicule, sur un train roulant identique ou différent de celui sur lequel est monté le groupe moto propulseur thermique. Bien que non représenté sur la figure 2, un réducteur peut aussi exister entre le crabot aval et les roues. Le déplacement du crabot aval peut être remplacé par un déplacement du crabot amont.

## Revendications

1. Procédé de désaccouplement d'une machine électrique (42) accouplée avec des roues (44) de train roulant d'un véhicule dépourvu d'embrayage au moyen de crabots (51, 52), comprenant deux étapes activées successivement à partir d'une demande de désaccouplement :
- une première étape de pilotage de la machine électrique (42) en couple, dans laquelle on applique à la machine électrique (42) une consigne de couple égale à un seuil calibré de couple cible (d) pour obtenir un couple nul exercé entre les crabots (51, 52) et on désactive un actionneur (34) de crabotage, de façon à permettre au crabot de se dégager le plus tôt possible; et
- une deuxième étape de pilotage de la machine électrique (42) en couple, dans laquelle on applique à la machine électrique (42) une consigne de couple qui suit une rampe débutant avec ledit seuil calibré de couple cible (d) et terminant avec une valeur nulle.

2. Procédé selon la revendication 1, **caractérisé en ce que** dans la deuxième étape de pilotage, on commande ledit actionneur (34) de façon à séparer les crabots (51, 52).

3. Procédé selon l'une des revendications précédentes, **caractérisé en ce que** ledit seuil calibré de couple cible (d) est paramétrable.

4. Système d'accouplement d'une machine électrique (42) avec des roues (44) de train roulant d'un véhicule dépourvu d'embrayage lorsque le véhicule est roulant, comprenant :
- un crabot (51) amont solidaire en rotation de la machine électrique (42) un crabot (52) aval solidaire en rotation des roues (44) et un actionneur (34) agencé pour rapprocher les deux crabots en translation le long d'un axe commun de rotation ;
- un dispositif électronique agencé pour recevoir une demande de désaccouplement, pour piloter la machine électrique (42) en couple en lui appliquant une consigne de couple égale à un seuil calibré de couple cible (d) qui permet d'obtenir un couple nul exercé entre les crabots (51, 52) et pour désactiver l'actionneur (34) de crabotage, de façon à permettre aux crabots (51, 52) de se dégager le plus tôt possible, puis pour suivre une rampe débutant avec ledit seuil calibré de couple cible et terminant avec une valeur nulle ; et
- un actionneur (34) de crabotage qui permet de séparer des crabots.

5. Système selon la revendication 4, **caractérisé en ce que** ledit seuil calibré de couple cible (d) est paramétrable.

6. Véhicule automobile comprenant un système selon l'une des revendications 4 ou 5.

## Patentansprüche

1. Verfahren zum Abkuppeln eines Elektromotors (42), der mit Rädern (44) eines Fahrgestells eines Fahrzeugs ohne Kupplung gekuppelt ist, mittels Klauen (51, 52), das zwei Schritte umfasst, die nacheinander ausgehend von einer Abkupplungsanfrage aktiviert werden:
- einen ersten Schritt des Drehmomentsteuerns des Elektromotors (42), bei dem man an den Elektromotor (42) einen Drehmomentsollwert anlegt, der gleich einem kalibrierten Zieldrehmomentschwellenwert (d) ist, um ein Drehmoment gleich null zu erhalten, das zwischen den Klauen (51, 52) ausgeübt wird, und man einen Klauenkupplungsaktuator (34) deaktiviert, um es der Klaue zu erlauben, möglichst früh auszurücken, und
- einen zweiten Schritt des Drehmomentsteuerns des Elektromotors (42), bei dem man an den Elektromotor (42) einen Drehmomentsollwert anlegt, der einer Rampe folgt, die mit dem kalibrierten Zieldrehmomentschwellenwert (d) beginnt und mit einem Wert gleich null endet.

2. Verfahren nach Anspruch 1, **dadurch gekennzeichnet, dass** man bei dem zweiten Steuerschritt den Stellantrieb (34) derart steuert, dass die Klauen (51, 52) getrennt werden.

3. Verfahren nach einem der vorhergehenden Ansprüche, **dadurch gekennzeichnet, dass** der kalibrierte Zieldrehmomentschwellenwert (d) parametrierbar ist.

4. Kupplungssystem eines Elektromotors (42) mit Fahrgestellrädern (44) eines Fahrzeugs ohne Kupplung, wenn das Fahrzeug fährt, das Folgendes umfasst:
- eine stromaufwärtige Klaue (51), die in Drehung fest mit dem Elektromotor (42) verbunden ist, eine stromabwärtige Klaue (52), die in Drehung fest mit den Rädern (44) verbunden ist, und einen Aktuator (34), der eingerichtet ist, um die zwei Klauen einander in Verschiebung entlang einer gemeinsamen Rotationsachse anzunähern,
- eine elektronische Vorrichtung, die eingerichtet ist, um eine Abkupplungsanfrage zu empfangen, um den Elektromotor (42) drehmomentzusteuern, indem an ihn ein Drehmomentsollwert gleich einem kalibrierten Zieldrehmomentschwellenwert (d) angelegt wird, der es erlaubt, ein Drehmoment gleich null zu erhalten, das zwischen den Klauen (51, 52) ausgeübt wird, um den Klauenkupplungsaktuator (34) derart zu deaktivieren, dass es den Klauen (51, 52) erlaubt wird, möglichst früh auszurücken, dann, um einer Rampe zu folgen, die mit dem kalibrierten Zieldrehmomentschwellenwert beginnt und mit einem Wert gleich null endet, und
- einen Klauenkupplungsaktuator (34), der es erlaubt, die Klauen zu trennen.

5. System nach Anspruch 4, **dadurch gekennzeichnet, dass** der Zieldrehmomentschwellenwert (d) parametrierbar ist.

6. Kraftfahrzeug, das ein System nach einem der Ansprüche 4 oder 5 umfasst.

## Claims

1. A method for disconnecting an electrical machine (42) that is connected by running gear wheels (44) of a clutchless vehicle by means of dogs (51, 52), including two steps that are successively actuated on the basis of a disconnection request:
- a first step of controlling the electrical machine (42) by means of torque, in which a torque setpoint equal to a calibrated target torque threshold (d) is applied to the electrical machine (42) so as to obtain a zero torque that is exerted between the dogs (51, 52), and a dog clutch actuator (34) is deactivated, so as to allow the dog to disengage as soon as possible; and
- a second step of controlling the electrical machine (42) by means of torque, in which a torque setpoint, which follows a slope starting with said calibrated target torque threshold (d) and ending with a zero value, is applied to the electrical machine (42).

2. The method according to Claim 1, **characterized in that** in the second controlling step, said actuator (34) is commanded so as to separate the dogs (51, 52).

3. The method according to one of the preceding claims, **characterized in that** said calibrated target torque threshold (d) is able to be parameterized.

4. A system for connecting an electrical machine (42) to running gear wheels (44) of a clutchless vehicle when the vehicle is running, including:
- an upstream dog (51) integral in rotation with the electrical machine (42), a downstream dog (52) integral in rotation with the wheels (44) and an actuator (34) arranged for bringing the two dogs together in translation along a common rotation axis;
- an electronic device arranged to receive a request for disconnection, to control the electrical machine (42) by means of torque by applying to it a torque setpoint equal to a calibrated target torque threshold (d) which allows a zero torque to be obtained, exerted between the dogs (51, 52), and to deactivate the dog clutch actuator (34), so as to allow the dogs (51, 52) to disengage as soon as possible, then to follow a slope starting with said calibrated target torque threshold and ending with a zero value; and
- a dog clutch actuator (34) which allows the dogs to be separated.

5. The system according to Claim 4, **characterized in that** said calibrated target torque threshold (d) is able to be parameterized.

6. A motor vehicle including a system according to one of Claims 4 or 5.
